# EUROPÄISCHE PATENTSCHRIFT

(11) **EP 0 852 893 B1**
(45) Veröffentlichungstag und Bekanntmachung des Hinweises auf die Patenterteilung: **22.09.1999**
(21) Anmeldenummer: 96914091.2
(22) Anmeldetag: 18.05.1996
(51) Int. Cl.: H05B 41/29

(54) **STEUERGERÄT FÜR DEN SCHNELLEN LICHTANLAUF EINER HOCHDRUCK-GASENTLADUNGSLAMPE**
CONTROL DEVICE FOR THE FAST STRIKING OF A HIGH-PRESSURE GAS DISCHARGE LAMP
UNITE DE COMMANDE POUR UN ALLUMAGE RAPIDE D'UNE LAMPE A DECHARGE A HAUTE PRESSION

(30) Priorität: 20.09.1995 DE 19534864
(43) Veröffentlichungstag der Anmeldung: 15.07.1998
(73) Patentinhaber: ROBERT BOSCH GMBH, 70442 Stuttgart (DE)
(72) Erfinder: KERN, Robert, D-77887 Sasbachwalden (DE)
(86) Internationale Anmeldenummer: DE9600876
(87) Internationale Veröffentlichungsnummer: WO9711581

(56) Entgegenhaltungen:
- EP-A- 0 459 126
- EP-A- 0 483 082
- EP-A- 0 644 710

## Beschreibung

### Stand der Technik

Die Erfindung geht aus von einem Steuergerät für den schnellen Lichtanlauf einer Hochdruck-Gasentladungslampe, insbesondere für den Einsatz in Kraftfahrzeugscheinwerfern, der im Oberbegriff des Anspruchs 1 definierten Gattung.

Aus der DE 41 36 486 A1 ist ein Vorschaltgerät zum Starten und Betreiben von Wechselstrom-Hochdruck-Gasentladungslampen bekannt, welches aus einer Gleichspannungsquelle, z.B. der Batterie eines Kraftfahrzeuges gespeist wird. Dabei wird mittels eines DC/DC Wandlers zunächst aus der Gleichspannung einer Gleichspannungsquelle eine stabilisierte und /oder leistungsgeregelte Gleichspannung erzeugt, die einen höheren Spannungswert hat. Dann wird aus dieser Spannung mit Hilfe einer gesteuerten Brückenschaltung der für den Betrieb erforderliche Wechselstrom erzeugt. Die Brückenschaltung kann sowohl im Gleichstrom- als auch im Wechselstrombetrieb betrieben werden und bildet die Versorgungsschaltung für die Hochdruck-Gasentladungslampe. Die Steuerung der Brückenschaltung erfolgt von einer Steuerschaltung und für die Zündung der Hochdruck-Gasentladungslampe ist eine Zündvorrichtung vorgesehen.

Bei diesem bekannten Vorschaltgerät wird zur Erzielung eines schnellen und zuverlässigen Zündens sowie schnelles und zuverlässiges Erreichen eines stabilen Brennzustandes ohne Flackern der Lampe, die Brückenschaltung bei Inbetriebnahme im Gleichstrombetrieb betrieben. Über eine Statusbestimmeinrichtung wird ein Signal erzeugt, wenn die Hochdruck-Gasentladungslampe erfolgreich gezündet wurde. Dieses Signal wird über eine Verzögerungsschaltung der Steuerschaltung für die Brückenschaltung zugeführt und sorgt dafür, daß erst nach der gegebenen Verzögerungszeit die Brückenschaltung von Gleichstrombetrieb in den Wechselstrombetrieb umgeschaltet wird.

Der hier eingeschlagene Weg ist von dem gemäß vorliegenden Erfindung vorgesehenen prinzipiell unterschiedlich.

Zur Steuerung beim Anlauf einer Hochdruck-Gasentladungslampe ist generell die Vedilis-Kurve als Strom-/Spannungskurve im Sinne einer Sollwertkurve vorgegeben. Die Vedilis-Kurve ist in den "System Specifications for Field Test" des VEDILIS Eureka Project 273 auf Seite B 1/3 dargestellt und als Strom/Spannungskennlinie für in Kraftfahrzeugen einzusetzende Gasentladungslampen vorgegeben. Dabei steht "Vedilis" als Abkürzung für "Vehicle Discharge Light System". Zur Regelung der Lampenleistung einer Gasentladungslampe wird danach in der Anlauf- bzw. Brennphase die Lampenspannung U_{L} gemessen und aus der Vedilis-Kurve der entsprechende, zur jeweiligen Lampenspannung U_{L} gehörige Lampenstrom I_{L} ermittelt. Dieser Lampenstrom I_{L} dient dann als Sollwert für den nachfolgenden Stromregelkreis, mit dem die Lampenleistung auf einen konstanten Wert, z.B. 35 W geregelt wird.

Generell ist es zur Nutzung einer Gasentladungslampe im Kraftfahrzeugscheinwerfer notwendig, möglichst viel Licht innerhalb kurzer Zeit nach dem Einschalten des Steuergerätes zur Verfügung zu stellen. Dies wird als schneller Lichtanlauf bezeichnet. Wie die o.g. Vedilis-Kurve vorgibt, kann dazu die Gasentladungslampe direkt nach dem Einschalten mit einer bestimmten Überlast betrieben werden. Diese Überlast wird dabei in Abhängigkeit von der Lampenspannung zurückgefahren. Es ist klar, daß durch eine derartige Überlast die Lampe nicht zerstört oder in ihrer Lebensdauer beeinträchtigt werden darf. Diese Forderung ist für alle Betriebsbedingungen einzuhalten. Des weiteren ist die Steuerung so zu wählen, daß die Lichtleistung nicht von einem bereits erreichten Wert wieder zurückschwingt, da dies allgemein als unangenehmes Flackern empfunden wird. Dieses Zurückschwingen der Lichtleistung wird auch als Lichtsattel bezeichnet.

In der Praxis hat es sich herausgestellt, daß eine Steuerung gemäß der o.g. Vedilis-Kurve Lichtsattel nicht vermeiden kann. Daher ist hier nach anderen Wegen zu suchen. Eine generelle Möglichkeit besteht darin, den Überlastbetrieb der Gasentladungslampe über eine reine Zeitsteuerung zu betreiben. Hierbei ist jedoch als sehr nachteilig anzusehen, daß der jeweilige Zustand der Gasentladungslampe grundsätzlich außer Betracht bleibt. Dies kann zur Zerstörung der Gasentladungslampe oder zumindest zur Beeinträchtigung ihrer Lebensdauer führen.

Aus der EP-A-O 459 126 ist ein Verfahren und eine Einrichtung zum Starten einer Hochdruck-Gasentladungslampe bekannt. Nach dem Zünden wird der Lampe für eine bestimmte Zeit eine Zusatzleistung zugeführt. Diese Zusatzleistung nimmt mit zunehmender Ausschaltzeit und mit abnehmender Zeitdauer der letzten Einschaltzeit der Lampe zu. Die Zeitdauer des Wirksamwerdens der Zusatzleistung nimmt ebenfalls mit zunehmender Ausschaltzeit und mit abnehmender Zeitdauer der letzten Einschaltzeit der Lampe zu. Um die Werte von Einschaltzeit und Dauer der letzten Einschaltzeit zu kennen, werden diese mittels einer Statusbestimmungseinrichtung ermittelt, welche die Ausschaltzeit mißt und in einem zweiten Zeitglied die Zeitdauer der letzten Einschaltzeit bestimmt. Mit diesen Werten wird aus einer vorher bestimmten Kennlinienschar die jeweils zutreffende Kennlinie zur Steuerung der Zusatzleistung ermittelt. Dabei ist wesentlich, daß ein Statuswert gebildet wird, der die Werte Lampe "ein" und Lampe "aus" annimmt und der von der Statusbestimmungseinrichtung für die Bestimmung der Ausschaltzeit und der Dauer der letzten Einschaltzeit zeitlich ausgemessen wird.

Ein Vorschaltgerät, wie es aus dieser EP-A-0 459 126 bekannt ist, ist konstruktiv recht aufwendig. Zudem berücksichtigt diese Steuerung während der Lampenanlaufphase nicht den jeweiligen momentanen Betriebszustand der Hochdruck-Gasentladungslampe, wodurch dieser je nach den vorliegenden Betriebsbedingungen eine Zusatzleistung zugeführt wird, welche nicht der erforderlichen Zusatzleistung entspricht. Dadurch wird häufig ein zuverlässiger und schneller Übergang der Hochdruck-Gasentladungslampe in einen stabilen stationären Betriebszustand nicht erreicht.

### Vorteile der Erfindung

Das erfindungsgemäße Steuergerät für den schnellen Lichtanlauf einer Hochdruck-Gasentladungslampe mit den kennzeichnenden Merkmalen des Anspruchs 1 hat demgegenüber den Vorteil, den Überlastbetrieb der Hochdruck-Gasentladungslampe deren jeweiligem Zustand neu anzupassen unter Vermeidung von Lichtsatteln und irgendwelchen schädlichen Einflüssen auf die Lebensdauer der Hochdruck-Gasentladungslampe.

Gemäß der Erfindung ist dazu prinzipiell vorgesehen, daß die Überlast derart definiert ist, daß Flackern bzw. Lichtsattel beim Lichtanlauf vermieden werden, und daß diese Überlast von der Steuerschaltung in Abhängigkeit von der Temperatur der Hochdruck-Gasentladungslampe gesteuert ist.

In vorteilhafter Ausgestaltung der Erfindung ist dazu vorgesehen, daß die Steuerschaltung die Temperatur der Hochdruck-Gasentladungslampe unterteilt nach Temperatur der Elektroden und Temperatur des Gases der Hochdruck-Gasentladungslampe berücksichtigt.

Nach einer besonders zweckmäßigen Weiterbildung der Erfindung ist vorgesehen, daß zur Ermittlung des Zustands der Hochdruck-Gasentladungslampe die Steuerschaltung den Strom- und/oder den Spannungsverlauf der Hochdruck-Gasentladungslampe bzw. der Versorgungsschaltung direkt nach dem Zündvorgang beobachtet und die sich dabei in Verbindung mit dem Innenwiderstand der Versorgungsschaltung ergebenden, für die verschiedenen Zustände der Hochdruck-Gasentladungslampe charakteristischen Strom-/Spannungsverläufe festgestellt werden, wobei sich diese bei den unterschiedlichen Zuständen der Hochdruck-Gasentladungslampe signifikant unterscheiden.

In weiterer zweckmäßiger Ausgestaltung der Erfindung werden bei der Ermittlung des Zustands der Hochdruck-Gasentladungslampe durch die Steuerschaltung mittels des Strom- und/oder des Spannungsverlaufs der Hochdruck-Gasentladungslampe bzw. der Versorgungsschaltung nicht nur Strom- und/oder Spannungsgrenzwerte, sondern auch insbesondere die dynamischen Kurvenverläufe, in der ersten Zeitspanne nach dem Zündvorgang, herangezogen.

In vorteilhafter Weiterbildung der Erfindung enthält die Steuerschaltung einen Mikrokontroller, der die notwendigen Beobachtungen für die Ermittlung des Zustands der Hochdruck-Gasentladungslampe in der Steuerschaltung durchführt und die zugehörigen Zustände feststellt.

In besonders vorteilhafter und zweckmäßiger Weiterbildung der Erfindung führt der Mikrokontroller in Abhängigkeit von dem detektierten Zustand der Hochdruck-Gasentladungslampe folgende wesentliche Steuerungsmaßnahmen durch:
bei kalter Hochdruck-Gasentladungslampe Beibehaltung eines hohen Ausgangsstrom der Versorgungsschaltung mit zeitlich begrenzter Überlastfunktion,
bei heißer Hochdruck-Gasentladungslampe Absenkung der Lampenleistung auf den Nennwert sofort nach Erkennung, und schließlich
bei warmer Hochdruck-Gasentladungslampe Absenkung der Lampenleistung auf schwache Überlast.

In vorteilhafter Ausgestaltung der Erfindung ist die Überlastfunktion zur Steuerung der aufgeschalteten Überlast eine Kombination aus Zeitsteuerung und brennspannungsabhängiger Steuerung. Zweckmäßigerweise ist die Überlastfunktion zeitlich begrenzt.

### Zeichnung

Die Erfindung ist anhand eines in der Zeichnung dargestellten Ausführungsbeispiels in der nachfolgenden Beschreibung näher erläutert. Es zeigt:

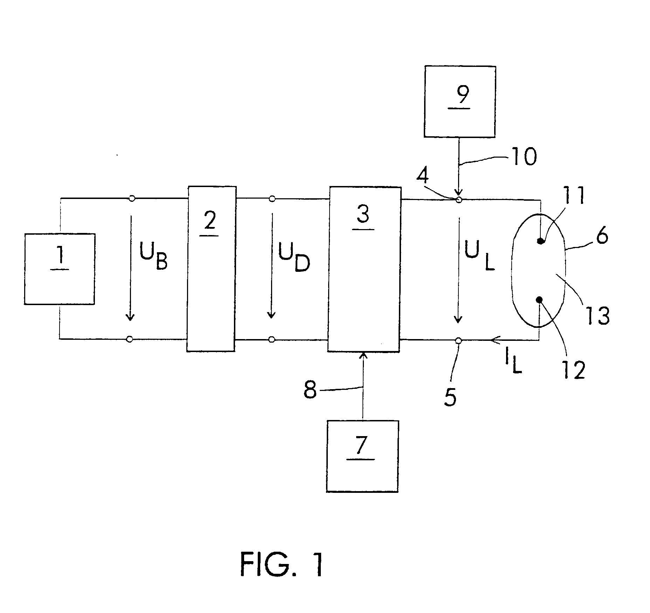

- Fig. 1: schematisch ein Blockschaltbild, in dem das erfindungsgemäße Steuergerät realisiert ist.

### Beschreibung des Ausführungsbeispiels

In Fig. 1 ist an Hand eines Blockschaltbilds schematisch ein Steuergerät dargestellt, in dem die Erfindung realisiert ist. Mit 1 ist eine Gleichspannungsquelle bezeichnet, welche die Batterie eines Kraftfahrzeuges sein kann. Sie gibt an ihren Ausgangsklemmen die Spannung U_{B} ab. Diese Spannung U_{B} wird von einem Gleichspannungs-/Gleichspannungswandler 2 (DC/DC Wandler) auf einen höheren Wert gebracht bzw. gewandelt. Dieser höhere Spannungswert U_{D} steht an den Ausgangsklemmen des DC/DC Wandlers 2 an. Sie bildet die Eingangsspannung zu einer gesteuerten Versorgungsschaltung 3, die eine Brückenschaltung sein bzw. enthalten kann. Die Versorgungsschaltung 3 generiert daraus einen gesteuerten Wechselstrom bzw. eine Wechselspannung oder auch eine gesteuerte Gleichspannung. Diese Wechselspannung oder diese Gleichspannung steht an den Ausgangsklemmen 4 und 5 an und bildet die Versorgungsspannung U_{L} einer Hochdruck-Gasentladungslampe 6 zu deren Versorgung mit Brennenergie. Zur Steuerung der Versorgungsschaltung 3 ist eine Steuerschaltung 7 vorgesehen, die ihre Steuerimpulse über mit dem Pfeil angedeutete Leitungen 8 einspeist. Weiterhin ist eine Zündschaltung 9 vorgesehen, die über mit einem Pfeil symbolisierte Leitung 10 die Zündspannung über die Klemme 4 der Hochdruck-Gasentladungslampe 6 zuführt.

Gemäß der Erfindung wird die Versorgungsschaltung 3 von der Steuerschaltung 7 derart gesteuert, daß die Hochdruck-Gasentladungslampe 6 beim Lichtanlauf mit einer definierten Überlast betrieben wird. Die Überlast ist dabei derartig definiert, daß Flackern bzw. Lichtsattel vermieden werden. Weiterhin wird diese Überlast von der Steuerschaltung 7 in Abhängigkeit vom Zustand der Hochdruck-Gasentladungslampe 6, insbesondere der Temperatur der Hochdruck-Gasentladungslampe 6, gesteuert. Vorteilhafterweise berücksichtigt die Steuerschaltung 7 die Temperatur der Hochdruck-Gasentladungslampe 6 unterteilt nach Temperatur der Elektroden 11, 12 und Temperatur des Gases 13 der Hochdruck-Gasentladungslampe 6.

Bei der Hochdruck-Gasentladungslampe 6 gibt es drei wesentliche Zustände, nämlich kalt, heiß und warm, die nachfolgend mit ihren Eigenschaften und Besonderheiten erläutert werden.

Eine kalte Hochdruck-Gasentladungslampe 6 liegt dann vor, wenn die Hochdruck-Gasentladungslampe 6 längere Zeit nicht eingeschaltet war und komplett abgekühlt ist. Elektroden 11 und 12 sowie Gas 13 sind dann kalt. Die kalte Hochdruck-Gasentladungslampe 6 kann mit deutlicher Überlast betrieben werden, um schneller viel Licht zu erzeugen. Dabei wird durch die Steuerschaltung 7 sichergestellt, daß durch die definierte elektrische Überlast kein thermischer Abbrand der Elektroden 11 und 12 entsteht, der die Lebensdauer der Hochdruck-Gasentladungslampe 6 verkürzen würde. Eine kalte Hochdruck-Gasentladungslampe 6 weist unmittelbar nach dem Einschalten eine sehr geringe Brennspannung auf, die in etwa weniger als die halbe Normbrennspannung beträgt.

Eine heiße Hochdruck-Gasentladungslampe 6 liegt dann vor, wenn diese zunächst durch längeren Brennbetrieb volle Temperatur erreicht hat und danach kurzzeitig ausgeschaltet wird. Die typische Dauer der Ausschaltzeit in diesem Beispiel beträgt ca. eine Sekunde. Elektroden 11 und 12 sowie Gas 13 sind dann heiß. Wird eine heiße Hochdruck-Gasentladungslampe 6 eingeschaltet bzw. wieder eingeschaltet, dann ist es zur Erreichung eines schnellen Lichtanlaufs nicht notwendig, die Lampe mit Überlast zu betreiben. Ein solcher Überlastbetrieb ist dann auch nicht zulässig, da er die Lebenserwartung der Hochdruck-Gasentladungslampe 6 wegen der thermischen Überlastung reduzieren würde.

Eine warme Hochdruck-Gasentladungslampe 6 liegt dann vor, wenn diese zunächst durch längeren Brennbetrieb volle Temperatur erreicht hat und danach für mehrere Sekunden ausgeschaltet wird. Die typische Dauer der Ausschaltzeit in diesem Beispiel beträgt ca. 10 Sekunden. Das Gas 13 hat wegen der relativ guten Isolation noch hohe Temperatur. Damit ist auch noch hoher Druck in der Hochdruck-Gasentladungslampe 6 vorhanden. Die Elektroden 11 und 12 sind jedoch bereits stark abgekühlt, weil die Wärmeableitung durch deren Metallanschlüsse gut ist. Bei der Wiedereinschaltung einer warmen Lampe wird zum Erreichen eines schnellen Lichtanlaufs gemäß der Erfindung mit einer genau definierten schwachen Überlast gefahren.

Für die sichere Übernahme der Hochdruck-Gasentladungslampe 6 vom Zünd- in den statischen Brennzustand einerseits und für die Lebensdauer der Hochdruck-Gasentladungslampe 6 andererseits, ist die sichere Unterscheidung der verschiedenen Zustände der Hochdruck-Gasentladungslampe 6 von entscheidender Bedeutung.

Gemäß der Erfindung enthält die Steuerschaltung 7 vorteilhafterweise einen Mikrokontroller. Dieser ist in der Figur nicht dargestellt. Mit Hilfe dieses Mikrokontrollers, der eine Art Beobachter darstellt, führt die Steuerschaltung 7 die notwendigen Beobachtungen für die Ermittlung des Zustands der Hochdruck-Gasentladungslampe 6 durch und stellt die zugehörigen Zustände fest. Dazu wird zunächst der Ausgangsstrom I_{L} der Versorgungsschaltung 3 durch die Steuerschaltung 7 auf einen hohen Wert eingestellt. Das ist notwendig, damit auch eine kalte Hochdruck-Gasentladungslampe 6 sicher den Brennbetrieb übernehmen kann. Da der Zündvorgang mit zeitlicher Verzögerung nach dem Einschalten eintritt, stellt sich an der Versorgungsschaltung 3 die Leerlaufspannung ein.

Direkt nach dem Zündvorgang, beispielsweise in den ersten 5 Millisekunden, werden von der Steuerschaltung 7 der Strom- und/oder den Spannungsverlauf der Hochdruck-Gasentladungslampe 6 bzw. der Versorgungsschaltung 3 und die sich dabei in Verbindung mit dem Innenwiderstand der Versorgungsschaltung 3 ergebenden Strom-/Spannungsverläufe feststellt. Diese sind für die verschiedenen Zustände der Hochdruck-Gasentladungslampe 6 charakteristisch und unterscheiden sich bei den unterschiedlichen Zuständen der Hochdruck-Gasentladungslampe 6 signifikant. In zweckmäßiger Weise werden bei der Ermittlung des Zustands der Hochdruck-Gasentladungslampe 6 durch die Steuerschaltung 7 mittels des Strom- und/oder des Spannungsverlaufs der Hochdruck-Gasentladungslampe 6 bzw. der Versorgungsschaltung 3 nicht nur Strom- und/oder Spannungsgrenzwerte herangezogen, sondern auch insbesondere die dynamischen Kurvenverläufe, in der ersten Zeitspanne nach dem Zündvorgang. Die Beobachtung der dynamischen Verläufe trägt zur besseren Unterscheidung bei als es bei der lediglichen Abtastung einer Zeitstelle gegeben ist.

Insbesondere mit Hilfe des Mikrokontrollers führt die Steuerschaltung 7 gemäß der Erfindung in Abhängigkeit von dem detektierten Zustand der Hochdruck-Gasentladungslampe 6 folgende wesentliche Steuerungsmaßnahmen durchführt:

Bei kalter Hochdruck-Gasentladungslampe 6 Beibehaltung eines hohen Ausgangsstrom der Versorgungsschaltung mit zeitlich begrenzter Überlastfunktion. Die aufgeschaltete Überlastfunktion ist genau definiert. Sie kann eine Kombination aus Zeitsteuerung und brennspannungsabhängiger Steuerung sein. Sie ist zeitlich begrenzt. Da sich bei kalter Hochdruck-Gasentladungslampe 6 erst noch der innere Gasdruck aufbauen muß, ist dieser Zustand besonders empfindlich hinsichtlich der Lichtsattel. Eine zeitgesteuerte Kompensation kann den Einbruch der Lichtleistung verhindern.
Bei heißer Hochdruck-Gasentladungslampe 6 Absenkung der Lampenleistung auf den Nennwert sofort nach Erkennung. Es wird also sofort in den normalen, statischen Brennbetrieb mit Nennleistung geschaltet. Dadurch wird thermische Überlastung vermieden.
Schließlich bei warmer Hochdruck-Gasentladungslampe 6 Absenkung der Lampenleistung auf schwache Überlast. Diese ist ebenfalls genau definiert. Auch sie kann eine Kombination aus Zeitsteuerung und brennspannungsabhängiger Steuerung sein. Allerdings ist es hier nicht notwendig, eine Kompensation hinsichtlich der Lichtsattel durchzuführen, da in der Hochdruck-Gasentladungslampe 6 der Gasdruck noch vorhanden ist.

Mit dem erfindungsgemäß gestalteter. Steuergerät wird die Hochdruck-Gasentladungslampe 6 in allen vorkommenden Zuständen optimal hinsichtlich Funktionalität und Lebensdauer versorgt.

## Patentansprüche

1. Steuergerät für den schnellen Lichtanlauf einer Hochdruck-Gasentladungslampe (6), insbesondere für den Einsatz in Kraftfahrzeugscheinwerfern, bei welchem aus der Gleichspannung (U_{B}) einer Gleichspannungsquelle (1, 2) mittels einer gesteuerten Versorgungsschaltung (3), die ggf. sowohl im Gleichstrom- als auch im Wechselstrombetrieb betrieben werden kann, ein Lampenstrom (I_{L}) und eine Lampenspannung (U_{L}) für die Versorgung der Hochdruck-Gasentladungslampe (6) mit Brennenergie generiert wird, und bei welchem eine Steuerschaltung (7) zur Steuerung der Versorgungsschaltung (3) sowie eine Zündvorrichtung (9) zum Zünden der Hochdruck-Gasentladungslampe (6) vorgesehen ist, und wobei die Steuerschaltung (7) die Versorgungsschaltung (3) derart steuert, daß die Hochdruck-Gasentladungslampe (6) beim Lichtanlauf mit einer Überlast betrieben wird, dadurch gekennzeichnet, daß die Überlast derart definiert ist, daß Flackern bzw. Lichtsattel beim Lichtanlauf vermieden werden und daß diese Überlast von der Steuerschaltung (7) in Abhängigkeit von der Temperatur der Hochdruck-Gasentladungslampe (6) gesteuert ist.

2. Steuergerät nach Anspruch 1, dadurch gekennzeichnet, daß die Steuerschaltung (7) die Temperatur der Hochdruck-Gasentladungslampe (6) unterteilt nach Temperatur der Elektroden (11, 12) und Temperatur des Gases (13) der Hochdruck-Gasentladungslampe (6) berücksichtigt.

3. Steuergerät nach Anspruch 1 oder 2, dadurch gekennzeichnet, daß zur Ermittlung des Zustands der Hochdruck-Gasentladungslampe (6) die Steuerschaltung (7) den Strom- und/oder den Spannungsverlauf der Hochdruck-Gasentladungslampe (6) bzw. der Versorgungsschaltung (3) direkt nach dem Zündvorgang beobachtet und die sich dabei in Verbindung mit dem Innenwiderstand der Versorgungsschaltung (3) ergebenden, für die verschiedenen Zustände der Hochdruck-Gasentladungslampe (6) charakteristischen Strom-/Spannungsverläufe feststellt, wobei sich diese bei den unterschiedlichen Zuständen der Hochdruck-Gasentladungslampe (6) signifikant unterscheiden.

4. Steuergerät nach Anspruch 3, dadurch gekennzeichnet, daß bei der Ermittlung des Zustands der Hochdruck-Gasentladungslampe (6) durch die Steuerschaltung (7) mittels des Strom- und/oder des Spannungsverlaufs der Hochdruck-Gasentladungslampe (6) bzw. der Versorgungsschaltung (3) nicht nur Strom- und/oder Spannungsgrenzwerte, sondern auch insbesondere die dynamischen Kurvenverläufe, in der ersten Zeitspanne nach dem Zündvorgang, herangezogen werden.

5. Steuergerät nach einem der vorigen Ansprüche, dadurch gekennzeichnet, daß die Steuerschaltung (7) einen Mikrokontroller enthält, der die notwendigen Beobachtungen für die Ermittlung des Zustands der Hochdruck-Gasentladungslampe (6) in der Steuerschaltung (7) durchführt und die zugehörigen Zustände feststellt.

6. Steuergerät nach Anspruch 4 oder 5, dadurch gekennzeichnet, daß der Mikrokontroller in Abhängigkeit von dem detektierten Zustand der Hochdruck-Gasentladungslampe (6) folgende wesentliche Steuerungsmaßnahmen durchführt:
bei kalter Hochdruck-Gasentladungslampe (6) Beibehaltung eines hohen Ausgangsstrom der Versorgungsschaltung mit zeitlich begrenzter Überlastfunktion,
bei heißer Hochdruck-Gasentladungslampe (6) Absenkung der Lampenleistung auf den Nennwert sofort nach Erkennung, und schließlich
bei warmer Hochdruck-Gasentladungslampe (6) Absenkung der Lampenleistung auf schwache Überlast.

7. Steuergerät nach einem der vorigen Ansprüche, dadurch gekennzeichnet, daß die Überlastfunktion zur Steuerung der aufgeschalteten Überlast eine Kombination aus Zeitsteuerung und brennspannungsabhängiger Steuerung ist.

8. Steuergerät nach einem der vorigen Ansprüche, dadurch gekennzeichnet, daß die Überlastfunktion zur Steuerung der aufgeschalteten Überlast zeitlich begrenzt ist.

## Claims

1. Control device for quickly starting the illumination of a high-pressure gas discharge lamp (6), in particular for use in motor vehicle headlights, in which a lamp current (IL) and a lamp voltage (UL) for supplying the high-pressure gas discharge lamp (6) with operating energy is generated from the DC voltage (U_{B}) of a direct-current source (1, 2) by means of a controlled supply circuit (3) which can, if appropriate, be operated both in DC mode and in AC mode, and in which a control circuit (7) is provided for controlling the supply circuit (3), and a starting device (9) is provided for starting the high-pressure gas discharge lamp (6), and in which the control circuit (7) controls the supply circuit (3) in such a way that the high-pressure gas discharge lamp (6) is operated with an overload when starting illumination, characterized in that the overload is defined in such a way that flicking and/or light saddle are avoided when starting illumination, and that this overload is controlled by the control circuit (7) as a function of the temperature of the high-pressure gas discharge lamp (6).

2. Control device according to Claim 1, characterized in that the control circuit (7) takes account of the temperature of the high-pressure gas discharge lamp (6) in a fashion subdivided according to the temperature of the electrodes (11, 12) and the temperature of the gas (13) of the high-pressure gas discharge lamp (6).

3. Control device according to Claim 1 or 2, characterized in that in order to determine the state of the high-pressure gas discharge lamp (6), the control circuit (7) observes the current profile and/or the voltage profile of the high-pressure gas discharge lamp (6) or of the supply circuit (3) directly after the starting operation, and determines the current/voltage profiles produced in the process in conjunction with the internal resistance of the supply circuit (3) and characteristic of the various states of the high-pressure gas discharge lamp (6), said profiles differing significantly in the different states of the high-pressure gas discharge lamp (6).

4. Control device according to Claim 3, characterized in that when determining the state of the high-pressure gas discharge lamp (6) with the aid of the control circuit (7) by means of the current profile and/or the voltage profile of the high-pressure gas discharge lamp (6) or the supply circuit (3) use is made not only of limiting current values and/or limiting voltage values, but also, in particular, of the dynamic curves in the first time interval after the starting operation.

5. Control device according to one of the preceding claims, characterized in that the control circuit (7) includes a microcontroller which carries out in the control circuit (7) the required observations for determining the state of the high-pressure gas discharge lamp (6) and determines the associated states.

6. Control device according to Claim 4 or 5, characterized in that the microcontroller carries out the following essential control measures as a function of the detected state of the high-pressure gas discharge lamp (6):
in the case of a cold high-pressure gas discharge lamp (6) - maintaining a high output current of the supply circuit with a temporary limited overload function,
in the case of a hot high-pressure gas discharge lamp (6) - lowering the lamp performance to the nominal value immediately after detection, and finally,
in the case of a warm high-pressure gas discharge lamp (6) - lowering the lamp performance to a weak overload.

7. Control device according to one of the preceding claims, characterized in that the overload function for controlling the connected overload is a combination of time control and control as a function of operating voltage.

8. Control device according to one of the preceding claims, characterized in that the overload function for controlling the connected overload is temporally limited.

## Revendications

1. Dispositif de commande pour l'allumage rapide d'une lampe à décharge de gaz à haute pression (6) notamment appliqué à des projecteurs de véhicules automobiles, selon lequel à partir de la tension continue (U_{B}) d'une source de tension continue (1, 2) on génère, à l'aide d'un dispositif d'alimentation commandé (3) qui peut fonctionner le cas échéant à la fois en courant continu et en courant alternatif, un courant de lampe (I_{L}) et une tension de lampe (U_{L}) pour l'alimentation de la lampe à décharge à haute pression (6) en énergie de combustion,
• un circuit de commande (7) assurant la commande du dispositif d'alimentation (3) ainsi qu'un dispositif d'allumage (9) pour allumer la lampe à décharge de gaz à haute pression (6),
• le circuit de commande (7) agit sur le dispositif d'alimentation (3) pour faire fonctionner la lampe à décharge de gaz à haute pression (6) avec une surcharge au démarrage,
• caractérisé en ce que
• la surcharge est définie pour éviter le scintillement ou l'affaissement du faisceau à l'allumage et
• la surcharge est commandée par le circuit de commande (7) en fonction de la température de la lampe à décharge à haute pression (6).

2. Dispositif de commande selon la revendication 1,
caractérisé en ce que
le circuit de commande (7) distingue la température de la lampe à décharge de gaz à haute pression (6) selon la température des électrodes (11, 12) et la température du gaz (13) de la lampe à décharge (6).

3. Dispositif de commande selon la revendication 1 ou 2,
caractérisé en ce que
pour déterminer l'état de la lampe à décharge de gaz à haute pression (6), le circuit de commande (7) observe la courbe d'intensité et/ou de tension de la lampe à décharge (6) ou du dispositif d'alimentation (3), directement après l'opération d'allumage, et détermine les courbes caractéristiques intensité/tension qui en résultent selon la résistance interne du dispositif d'alimentation (3), pour les différents états de la lampe à décharge de gaz à haute pression (6), ces différents états de la lampe à décharge de gaz (6) se distinguant de manière significative.

4. Dispositif de commande selon la revendication 3,
caractérisé en ce qu'
en déterminant l'état de la lampe à décharge de gaz à haute pression (6) par le dispositif de commande (7), à l'aide de la courbe intensité et/ou tension de la lampe à décharge de gaz à haute pression (6) ou du dispositif d'alimentation (3), on utilise non seulement les valeurs limites de l'intensité et/ou de la tension mais également notamment les courbes dynamiques dans la première période après l'opération d'allumage.

5. Dispositif de commande selon l'une des revendications précédentes,
caractérisé en ce que
le circuit de commande (7) commande un micro-contrôleur effectuant les observations nécessaires pour déterminer l'état de la lampe à décharge (6) dans le circuit de commande (7) et constate les états correspondants.

6. Dispositif de commande selon la revendication 4 ou 5,
caractérisé en ce que
le micro-contrôleur effectue les opérations de commande essentielles suivantes en fonction de l'état détecté de la lampe à décharge de gaz à haute pression (6) :
- pour une lampe à décharge (6), froide, le dispositif d'alimentation conserve un courant de sortie élevé avec une fonction de surcharge limitée dans le temps,
- pour une lampe à décharge (6), brûlante, on abaisse la puissance de la lampe à la valeur nominale, dès que cette constatation est faite, et, enfin
- pour une lampe à décharge (6), chaude, on abaisse la puissance de la lampe à une faible surcharge.

7. Dispositif de commande selon l'une quelconque des revendications précédentes,
caractérisé en ce que
la fonction de surcharge pour commander la surcharge appliquée est une combinaison d'une commande de temps et d'une commande dépendant de la tension de combustion.

8. Dispositif de commande selon l'une des revendications précédentes,
caractérisé en ce que
la fonction de surcharge pour commander l'état de surcharge appliqué est limitée dans le temps.
